# EUROPEAN PATENT SPECIFICATION

(11) **EP 2 070 406 B1**
(45) Date of publication and mention of the grant of the patent: **03.04.2013**
(21) Application number: 06830862.6
(22) Date of filing: 22.09.2006
(51) Int. Cl.: A01G 3/08

(54) **MACHINE FOR CUTTING OFF LOW BUDS IN TREE PLANTATIONS**
MASCHINE ZUM ABSCHNEIDEN UNTERER KNOSPEN IN BAUMPLANTAGEN
MACHINE SERVANT À TAILLER LES PETITES POUSSES DE PLANTATIONS D'ARBRES

(43) Date of publication of application: 17.06.2009
(73) Proprietor: Jumar Agricola, S.L., 26350 La Rioja (ES)
(72) Inventor: MARTINEZ ALMENDARIZ, Julian, E-26350 La Rioja (ES)
(74) Representative: Carpintero Lopez, Francisco
(86) International application number: PCT/ES2006/000529
(87) International publication number: WO 2008/034919

(56) References cited:
- DE-A1- 2 541 199
- DE-A1- 2 704 901
- DE-A1- 3 112 297
- DE-A1- 4 026 284
- ES-A1- 2 219 131
- ES-U- 1 048 243
- GB-A- 1 510 463
- NL-A- 8 300 292
- US-A- 5 318 081
- US-A- 5 430 999

## Description

### Object of the Invention

The invention relates to a trimming machine which is installed in a tractor and is designed to cut or prune shoots or low branches of crop tree plantations, preferably being applicable for olive trees which are arranged in a row in a plantation.

The object of the invention consists of the machine incorporating respective cutting mechanisms located on its sides, which are provided with mobility in the longitudinal direction to adapt to the width between trees, as well as with rotating movement about their longitudinal axis to regulate their orientation and with mobility in the vertical plane to adopt different working inclinations, as well as a transport position.

Another object of the invention is to provide the machine with protective elements which cover the cutting mechanisms when pruning is being done, in combination with a retractable system lowering the cutting mechanisms, preventing them from hitting against the tree trunks causing damages.

### Background of the Invention

The manual pruning of crop trees consists of eliminating, by means of conventional tools, branches which project from the lower areas of the tree trunks and tend to touch the ground. This pruning is generally done to leave the area close to the trees clear and thus facilitate the subsequent harvesting or picking task, since the branches would otherwise obstruct or jam the nets or canvases which are placed in the lower parts of the trees when picking the fruits, for example the olives, by vibrating the olive trees.

This manual pruning done in crop tree plantations is a tedious task involving considerable time and therefore a high cost in manual labor. The pruning cost for a highly intensive system can represent 70% of the crop costs after plantation.

Correct pruning which makes the rows all uniform is essential for being able to suitably perform a later mechanical harvesting in the highly intensive system.

Invention patent EP 0 950 350 discloses a head for thinning out or disbudding trained vegetation, which is particularly applicable for eliminating the shoots and/or young branches which develop and grow out of the main branches of the stump.

This head comprises two motor-driven plates having a plurality of flexible straps on their periphery which move closer and adapt to the distance on both sides of the tree trunk. These plates are provided with opposite rotating movements and incorporate means for regulating the intensity of the whipping force of the straps on the vegetation.

This head whips the branches of the plants or trees to cut the young shoots but it does not eliminate the branches, which are obstacles when placing blankets or canvases which will gather the fruit in the subsequent picking.

Invention patent ES 2 219 131 relates to a machine for working the soil in tree or shrub plantations which is assembled on the hitch system of a tractor, having lateral tools actuated by the power take-off of the tractor for weeding work or the like.

The machine incorporates a tool holder provided with transversely movable arms, the ends of which are adapted to carry lateral tools in front of which there are several sensing devices acting on the power mechanization control system assuring the axial movement of said arms and the automatic recentering of said tools with respect to the axis between rows of trees when one of the sensing devices finds an obstacle, such as a vine, a trellis post or a tree trunk while working.

Invention patent ES 2 219 132 relates to a universal tool holder used for agricultural work in tree and shrub plantations, which carries machines used for performing cultivation or treatment work, such as weeding, reaping, plowing, raking, leaf-stripping or pruning.

This tool holder is provided with respective arms ending in corresponding tools, which have an articulated raising and lowering movement and an independent articulated shifting movement of each of the arms in the horizontal plane for their approximation or distancing.

DE 3112297 and GB1510463 disclose trimming machines with the features of the preamble of claim 1.

The previously described structures have certain mechanical and constructive complexity and can therefore be optimized.

### Description of the Invention

The trimming machine for trimming low shoots forming the object of this invention as defined in claim 1 allows cutting excess low branches emerging from tree trunks clustered in parallel rows, which machine can be adapted to a tractor and essentially consists of respective longitudinal cutting mechanisms, preferably double saws provided with alternating movement which can be positioned in width and in height, as well as in inclination about their longitudinal axis, defining an angle of attack, with the possibility of also regulating their inclination in the vertical plane to obtain a withdrawn transport position.

The simplicity of the structure of the machine is one of the essential aspects of the invention in combination with the range of described movements facilitating adapting it to the alley between the rows of trees and assure the positional orientation of the longitudinal cutting mechanisms to achieve suitable cutting and removal of the vegetation mass.

The trimming machine also incorporates the possibility of independently retracting the longitudinal cutting mechanisms with a folding movement in the horizontal plane, having for that purpose sensing devices or protecting devices located in front of the longitudinal cutting mechanisms forming the elements for contacting against the obstacle, such as a tree trunk located in the path, preventing the longitudinal cutting mechanisms from hitting against said obstacle and upon contact with the obstacle, they are folded together with the longitudinal cutting mechanisms backwards.

To achieve the desired movements, the trimming machine for trimming low shoots is designed based on a fixed frame which is coupled to the anchoring points of the front of the tractor with respect to which a mobile frame shifts in height by means of a hydraulic cylinder, which incorporates a horizontal strut with respect to which corresponding lateral arms are extended or withdrawn with telescopic movement, which arms bear at their ends columns to which the longitudinal cutting mechanisms are associated. The movement of these arms determines the adaptation in width of the machine to the width of the alley defined between rows of crop trees.

The activation of the vertical raising and lowering movement of the arms and of the cylinder is carried out hydraulically from the tractor using the power take-off.

The operation of the longitudinal cutting mechanism is preferably hydraulic and can incorporate a cutting speed regulator for the double saws.

The longitudinal cutting mechanism is assembled with the ability to rotate about its longitudinal axis in a vertical plane with respect to a first articulation part, which can in turn rotate in a vertical plane perpendicular to the previous one with respect to a second articulation part in turn provided with the ability to rotate in the horizontal plane with respect to a clamp which is coupled at a certain height on the mentioned column.

The machine has first fixing means establishing the desired position of the longitudinal cutting mechanism with respect to the first intermediate articulation part thus defining the inclination of the longitudinal cutting mechanism about its longitudinal axis. The angle of attack of the longitudinal cutting mechanism with respect to the shoots to be cut is thus established.

On the other hand, to establish the position of the longitudinal cutting mechanism, to which the first articulation part has been fixed with respect to the vertical axis, second fixing means are used, which means fix the first articulation part to the second articulation part. These second fixing means allow fixing the longitudinal cutting mechanism in the horizontal position in its normal operative cutting situation, as well as to incline it upwardly until reaching an elevated position in which it is fixed for its transport for example.

The protecting device or sensing device is associated to the first articulation part with the participation of a support.

The longitudinal cutting mechanism integral with the first articulation part and with the second articulation part can pivot in the horizontal plane about the clamp fixed to the column; this situation occurs when the protecting device hits against an obstacle. The second articulation part incorporates elastic recovery means which dampen this pivoting movement and allow the recovery of the normal operative position of the longitudinal cutting mechanism.

The incorporation of a rest carriage especially designed to support the fixed frame of the machine in its rest or storage situation is additionally contemplated, which carriage is provided with a hydraulic cylinder facilitating the position in height of the machine on the front of the tractor. The carriage has wheels which allow its manual movement.

### Description of the Drawings

To complement the description being made and for the purpose of aiding to better understand the features of the invention according to a preferred practical embodiment thereof, a set of drawings is attached as an integral part of said description which shows the following in an illustrative and non-limiting manner:
Figure 1 shows a perspective view of the trimming machine for trimming low shoots assembled on the front of a tractor.
Figure 2 shows a front view of the trimming machine assembled on the front of a tractor for the situation in which its arms with the cutting mechanisms are in a raised position.
Figure 3 shows a front view similar to the previous one in which unlike the former, the arms with the cutting mechanisms have been lowered.

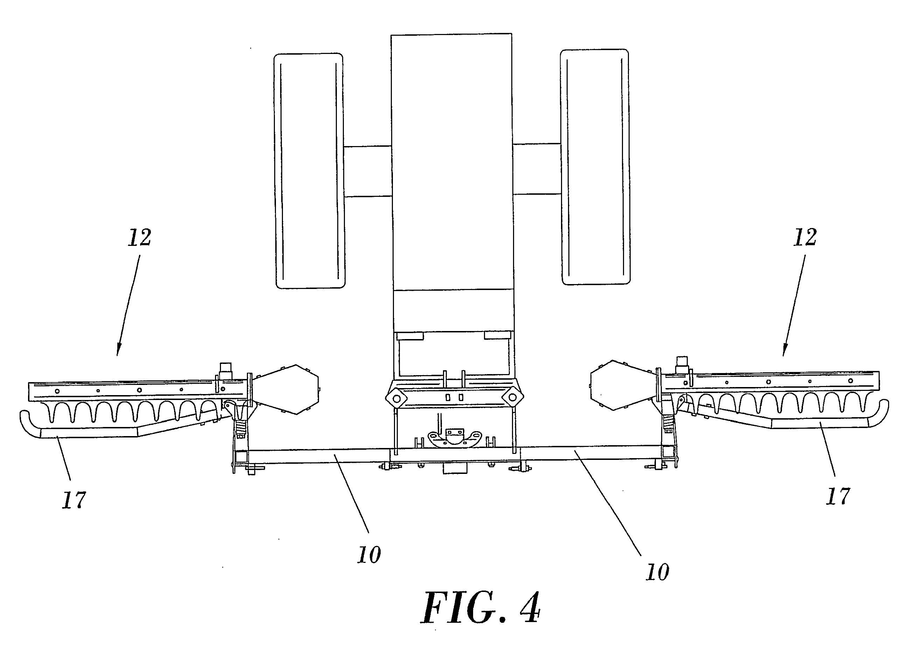

Figure 4 shows a plan view of the trimming machine assembled on the front of a tractor.

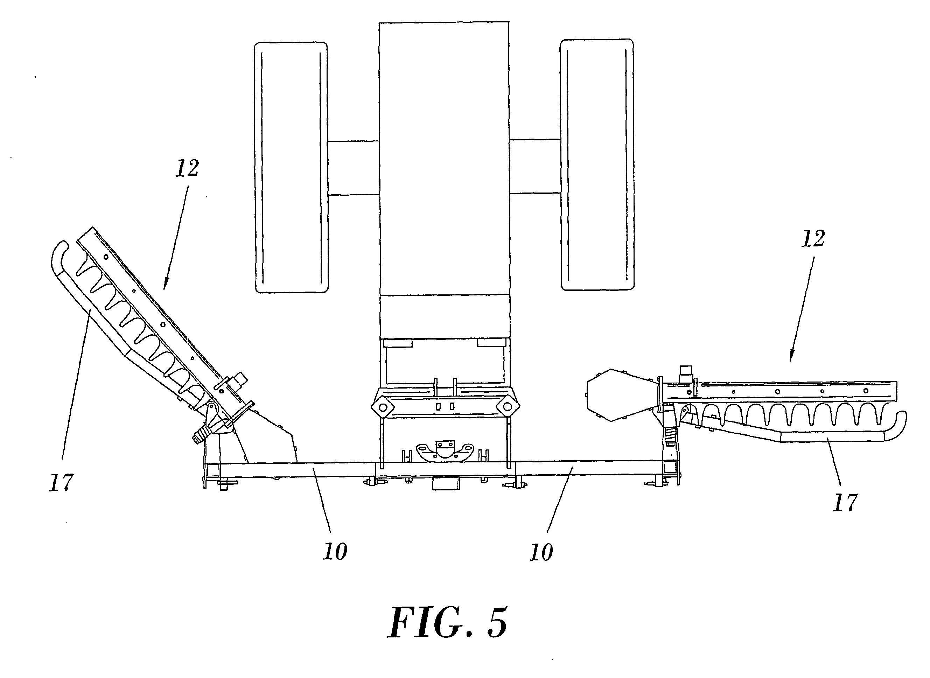

Figure 5 shows a plan view of the trimming machine assembled on the front of a tractor in which it can be seen that one of the cutting mechanisms is folded when its sensing device contacts against an obstacle.
Figure 6 shows a front view of the machine in which the cutting mechanisms are withdrawn in their transport position.
Figure 7 shows an exploded perspective view of the longitudinal cutting mechanism and intermediate parts connecting it to the column.
Figure 8 shows a perspective view of the trimming machine assembled on a rest carriage.
Figure 9 shows respective detail views A and B of Figure 8, an inclined position of the longitudinal cutting mechanism being shown in detail A.
Figure 10 shows a sectional view of the second articulation part assembled on the vertical bushing of the clamp.

### Preferred Embodiment of the Invention

A preferred embodiment of the trimming machine for trimming low shoots forming the object of this invention is described below in view of the figures.

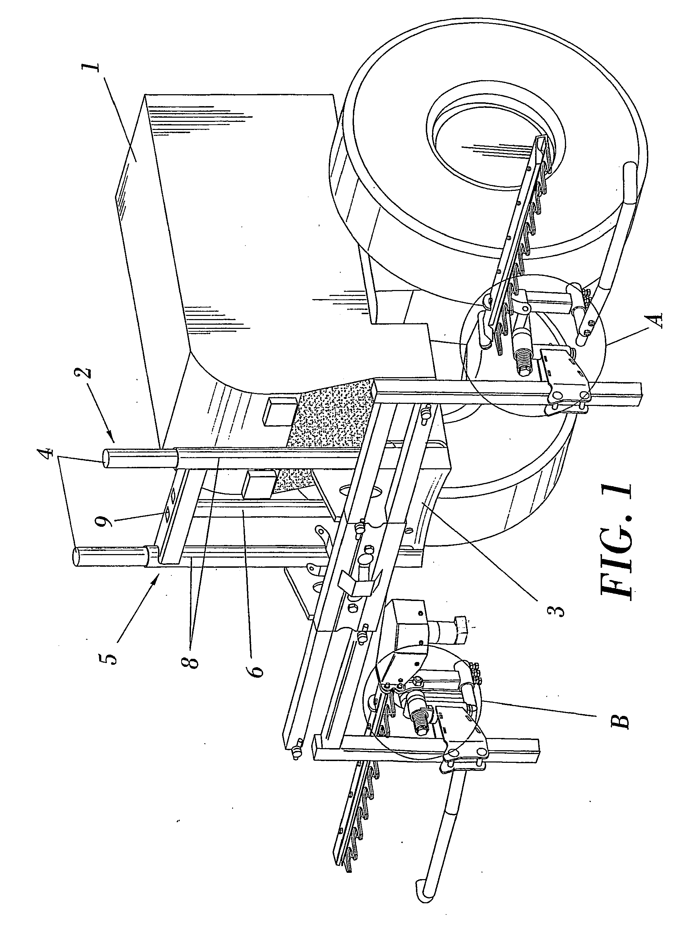

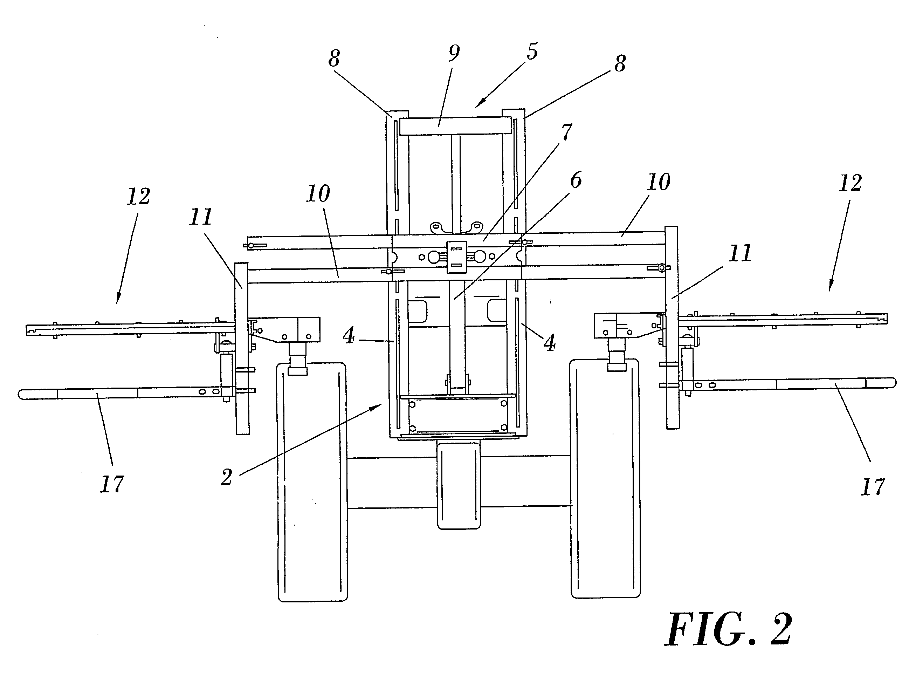

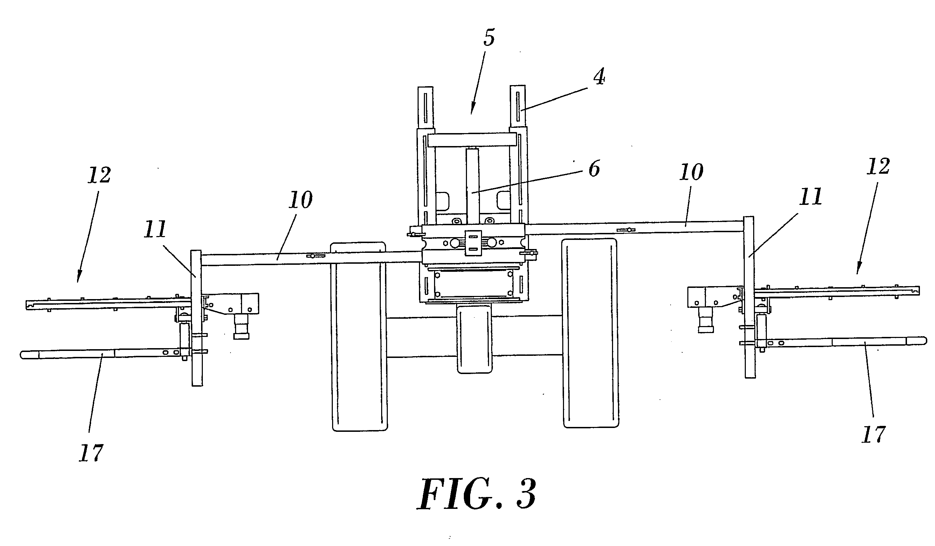

Figure 1 shows that the trimming machine can be assembled in the front of a tractor (1) by means of a fixed frame (2), provided with a cross-member (3) which is coupled at the anchoring points of the tractor and respective vertical profiles (4), with respect to which a mobile frame (5) moves in height by the action of a hydraulic cylinder (6), as shown in Figures 2 and 3, which frame is formed by a horizontal strut (7) from which there extend laterally and above respective tubular profiles (8) externally moving on the vertical profiles (4) and which are also connected by an upper beam (9) on which the rod of the hydraulic cylinder (6) acts to cause the vertical raising or lowering of the mobile frame (5).

Extending on the horizontal strut (7) of the mobile frame (5) on both sides with telescopic movement there are horizontal corresponding arms (10) coupled by their ends to vertical columns (11) to which longitudinal cutting mechanisms (12) are assembled at a certain height with the participation, among others, of a clamp (18), which arms adapt to the width of the alley defined between rows of trees based on the movement of said horizontal arms (10) to trim the low shoots of the trees by means of the longitudinal cutting mechanisms (12).

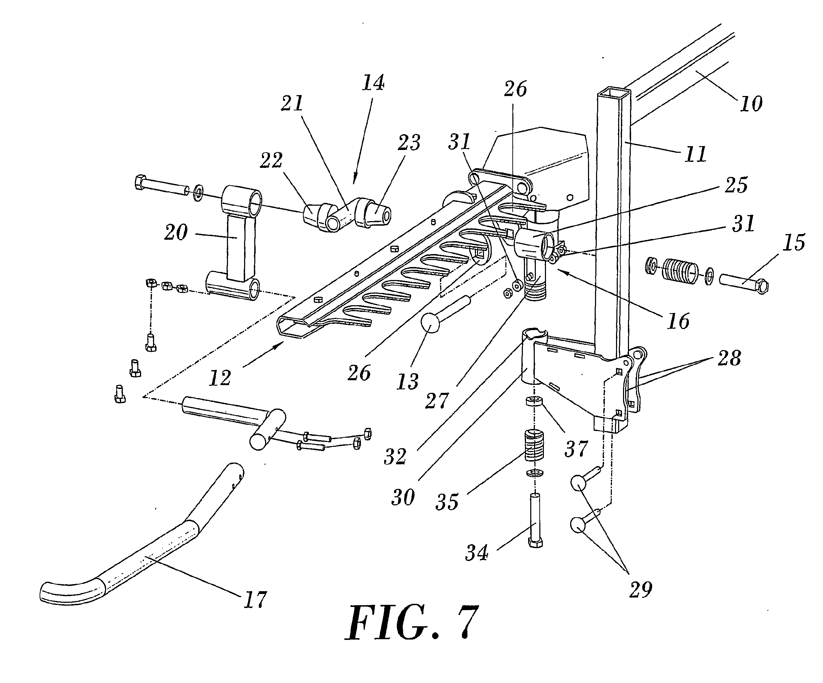

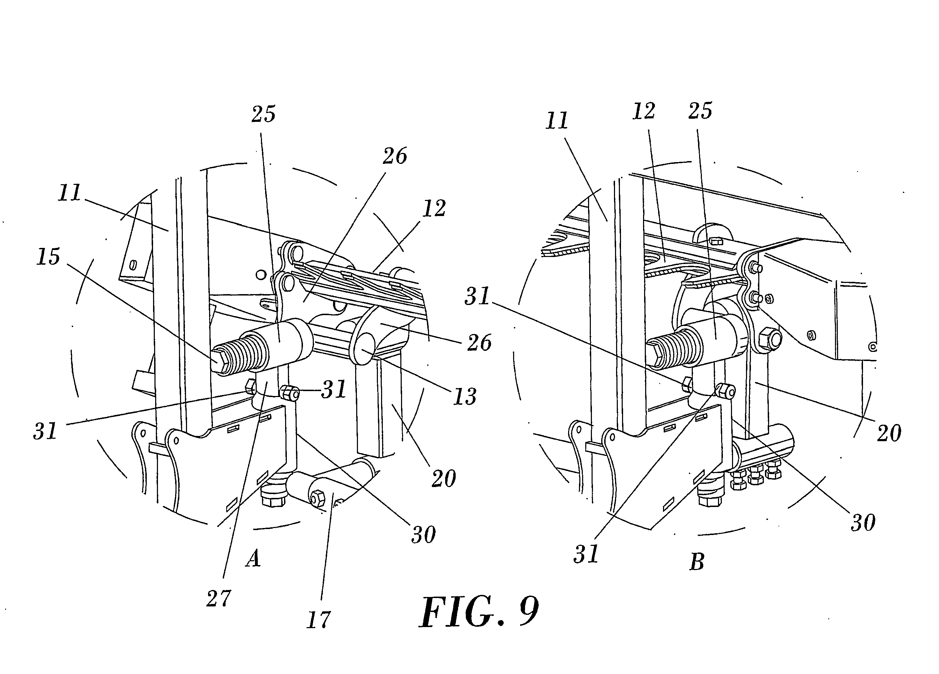

Figure 7 shows that the longitudinal cutting mechanism (12) has lugs (26) on which there are introduced first fixing means (13) fixing the angular orientation of the longitudinal cutting mechanism (12) with respect to its longitudinal axis on a first articulation part (14) thus defining an angle of attack, as can be seen in detail A of Figure 9.

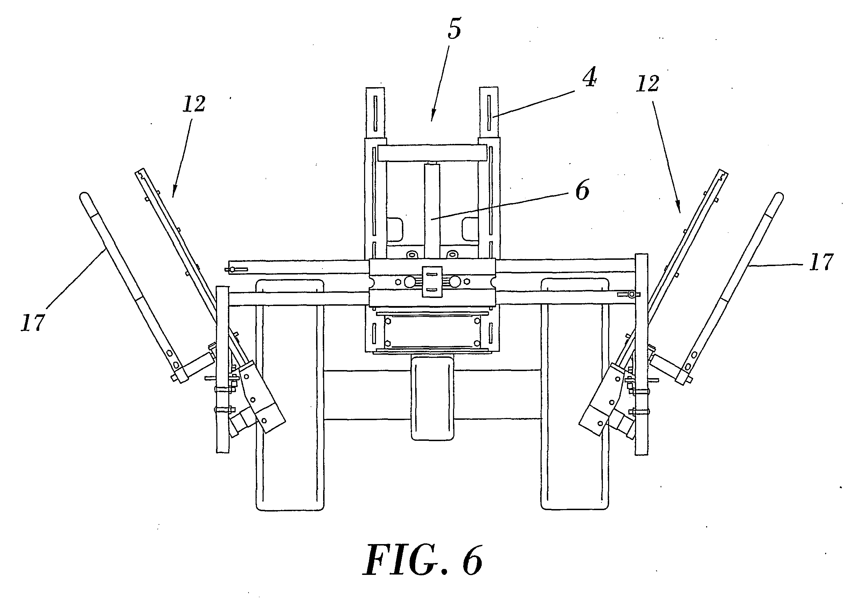

Also introduced on this first articulation part (14) there are second fixing means (15) fixing the inclination of the longitudinal cutting mechanism (12) with respect to the vertical on a second articulation part (16) defining either its working or transport position, as is the case of Figure 6.

There is coupled to the first articulation part (14) a sensing device or protecting device (17) which is in a position that is ahead of longitudinal cutting mechanism (12), being the sector of contact when there is an obstacle to protect the longitudinal cutting mechanism (12). It must also be indicated that the second articulation part (16) is provided with rotating movement in the horizontal plane about the clamp (18) to facilitate the retraction of the longitudinal cutting mechanism (12) when the protecting device (17) contacts with an obstacle, incorporating between the clamp (18) and the second articulation part (16) elastic recovery means (35) which tend to recover their normal operating position.

The protecting device (17) can consist of a bent bar which is coupled to the first articulation part (14) by means of a support (20).

On the other hand, this same Figure 7 shows that the first articulation part (14) can be formed by a tubular central section (21) from the ends of which there extend first and second end sections (22, 23) oriented at 90º and with different directions, the first fixing means (13) being coupled on its central section (21), the support (20) being coupled on its first end section (22) and the second fixing means (15) being coupled on its second end section (23).

The second articulation part (16) comprises a horizontal bushing (25) from which there extends at the lower part a vertical piston (27). The second end section (23) is rotatably coupled on the horizontal bushing (25), fixing the position of the first articulation part (14) to the second articulation part (16) by means of the second fixing means (15).

On the other hand, the clamp (18) consists of brackets (28) encompassing the column (11) at the desired height, being fixed thereto by third fixing means (29), said brackets (28) being joined by a vertical bushing (30) in which the vertical piston (27) of the second articulation part (16) is rotatably coupled.

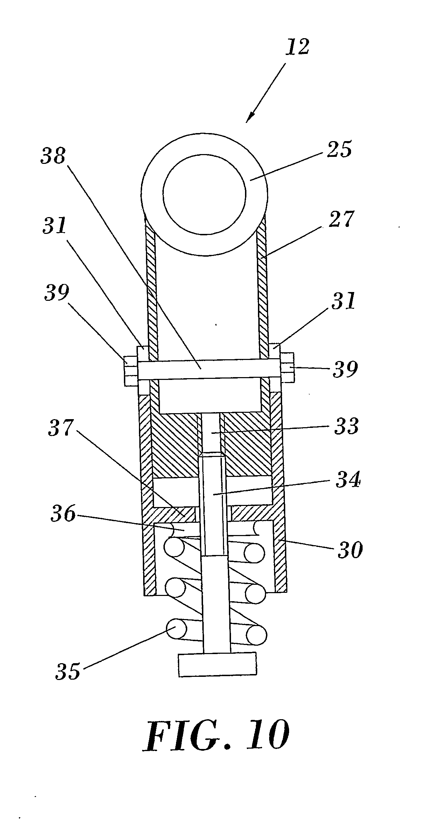

It has been provided that the second articulation part (16) has wheels (31), depicted in Figures 7 and 10, laterally coupled and in opposite arrangement on the vertical piston (27) which are supported on the upper face of the vertical bushing (30) in which there is arranged a cam (32) on which the wheels (31) roll when the second articulation part (16) rotates as a result of the contact of the protecting device (17) against an obstacle. The vertical piston (27) has a central borehole (33) in which a screw (34) is threaded, which is surrounded by elastic recovery means, such as a spring (35) located between the head of the screw (34) and a horizontal bearing (36) resting against an internal disc (37) defined in the vertical bushing (30). The rotating movement of the wheels (31) on the cam (32) will determine the raising of the vertical piston (27) and accordingly the compression of the spring (35). This spring (35) will transmit a recovery force which will tend to recover the initial position of the second articulation part (16) and therefore of the protecting device (17), while at the same time the latter is no longer contacting the obstacle.

Figure 10 also shows that the wheels (31) are traversed by a shaft (38) likewise traversing the vertical piston (27) and are fixed by means of nuts (39).

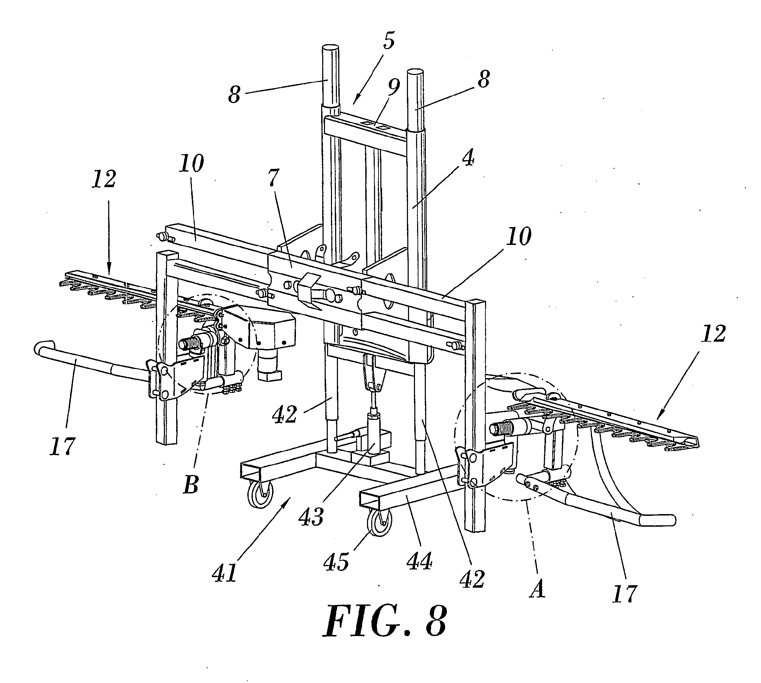

Figure 8 shows a rest carriage (41) on which the trimming machine can be supported, which is formed by a structure provided with posts (42) and a base (44) assembled on wheels (45), on which posts (42) the fixed frame (2) of the trimming machine is supported in its rest or storage situation, which also has a hydraulic cylinder (43) facilitating the positioning in height of the machine on the front of the tractor (1).

## Claims

1. Trimming machine for trimming low shoots in tree plantations to be assembled in the front of a tractor (1) by means of a fixed frame (2) with respect to which a mobile frame (5) provided with a horizontal strut (7) moves in height with vertical movement, from the sides of which there extend with telescopic movement corresponding horizontal arms (10) bearing at their ends vertical columns (11) to which cutting tools (12) are associated at a certain height, the cutting tools (12) consist of longitudinal cutting mechanisms (12), **characterized in that** the machine comprises independently associated to each vertical column (11):
- a first articulation part (14) on which there are rotatably assembled lugs (26) belonging to the longitudinal cutting mechanism (12) with the participation of a first fixing means (13) fixing the angular orientation of the longitudinal cutting mechanism (12) with respect to its longitudinal axis defining an angle of attack,
- a second articulation part (16), provided with rotating movement in the horizontal plane about a clamp (18) encompassing the vertical column (11), to which the first articulation part (14) is fixed by means of a second fixing means (15) which establishes the inclination of the longitudinal cutting mechanism (12) with respect to the vertical to define a working or transport position,
- a protecting device (17) coupled to the first articulation part (14) by means of a support (20) which is in a position that is ahead of the longitudinal cutting mechanism (12), forming a sector of contact when there is an obstacle, protecting the longitudinal cutting mechanism (12) and causing the retraction thereof due to the rotation of the second articulation part (16) in the horizontal plane, the second articulation part (16) incorporating elastic recovery means (35) which tend to recover the operating position of the longitudinal cutting mechanism (12).

2. Trimming machine for trimming low shoots in tree plantations according to claim 1, **characterized in that** the fixed frame (2) is provided with a cross-member (3) which is coupled at the anchoring points of the tractor (1) and respective vertical profiles (4), and the mobile frame (5) is formed by a horizontal strut (7) from which there extend laterally and above respective tubular profiles (8) externally moving on the vertical profiles (4) by the action of a hydraulic cylinder (6) and which are also connected by an upper beam (9) on which the rod of the hydraulic cylinder (6) acts to cause the vertical raising or lowering of the mobile frame (5).

3. Trimming machine for trimming low shoots in tree plantations according to claim 1, **characterized in that** the first articulation part (14) is formed by a tubular central section (21) from the ends of which there extend first and second end sections (22, 23) oriented at 90°- and with different directions, the first fixing means (13) being coupled on its central section (21), the support (20) being coupled on its first end section (22) and the second fixing means (15) being coupled on its second end section (23).

4. Trimming machine for trimming low shoots in tree plantations according to claim 1, **characterized in that** the second articulation part (16) comprises a horizontal bushing (25) in which the second end section (23) is rotatably coupled, the position of the first articulation part (14) being fixed to the second articulation part (16) by means of second fixing means (15).

5. Trimming machine for trimming low shoots in tree plantations according to claim 1, **characterized in that** the clamp (18) consists of brackets (28) encompassing the column (11) at a certain height, being fixed thereto by third fixing means (29), said brackets (28) being joined by a vertical bushing (30).

6. Trimming machine for trimming low shoots in tree plantations according to claims 4 and 5, **characterized in that** the second articulation part (16) additionally comprises a vertical piston (27) extending at the lower part to the horizontal bushing (25) which is rotatably coupled on the vertical bushing (30).

7. Trimming machine for trimming low shoots in tree plantations according to claims 4 to 6, **characterized in that** the second articulation part (16) additionally comprises wheels (31) laterally coupled to the vertical piston (27), in opposite arrangement, resting on the upper face of the vertical bushing (30) in which there is arranged a cam (32) on which the wheels (31) roll when the second articulation part (16) rotates due to the contact of the protecting device (17) against an obstacle, and the vertical piston (27) has a central borehole (33) in which a screw (34) is threaded, which is surrounded by elastic recovery means (35) resting at one end on the head of the screw (34) and at its other end on a horizontal bearing (36) in turn resting against an internal disc (37) defined in the vertical bushing (30), wherein the rotating movement of the wheels (31) on the cam (32) when the protecting device (17) is retracted determines the raising of the vertical piston (27) and the compression of the elastic recovery means (35), which tend to recover the initial position of the protecting device (17).

## Patentansprüche

1. Beschneidemaschine zum Beschneiden unterer Triebe in Baumplantagen, die vor einem Traktor (1) mit Hilfe eines feststehenden Rahmens (2) anzubringen ist, zu dem sich ein beweglicher Rahmen (5), der mit einer horizontalen Strebe (7) versehen ist, in der Höhe mit einer Vertikalbewegung bewegt, von dessen Seiten sich mit teleskopartiger Bewegung entsprechende horizontale Arme (10) erstrecken, die an ihren Enden vertikale Streben (11) tragen, an denen Schneidwerkzeuge (12) in einer bestimmten Höhe angebracht sind, wobei die Schneidwerkzeuge (12) aus länglichen Schneidmechanismen (12) bestehen, **dadurch gekennzeichnet, dass** die Maschine, unabhängig mit jeder vertikalen Strebe (11) verbunden, umfasst:
- ein erstes Gelenkteil (14), an dem drehbar Aufnahmen (26), die zu dem länglichen Schneidmechanismus (12) gehören, mit Hilfe einer ersten Fixiereinrichtung (13) angebracht sind, die die Winkelausrichtung des länglichen Schneidmechanismus' (12) in Bezug auf dessen Längsachse fixieren, wodurch ein Angriffswinkel festgelegt ist,
- ein zweites Gelenkteil, das mit drehender Bewegung in der horizontalen Ebene um eine Schelle (18) vorgesehen ist, die die vertikale Strebe (11) umgreift, an dem das erste Gelenkteil (14) mit Hilfe einer zweiten Fixiereinrichtung (15) fixiert ist, die die Neigung des länglichen Schneidmechanismus (12) in Bezug auf die Vertikale einrichtet, um eine Arbeits-oder Transportstellung zu definieren,
- eine Schutzvorrichtung (17), die mit dem ersten Gelenkteil (14) mit Hilfe einer Halterung (20) gekoppelt ist, die in einer Position ist, die sich vor dem länglichen Schneidmechanismus (12) befindet, und einen Kontaktsektor ausbildet, wenn es ein Hindernis gibt, den länglichen Schneidmechanismus (12) schützt und ein Zurückziehen desselben infolge der Drehung des zweiten Gelenkteils (16) in der horizontalen Ebene bewirkt, wobei das zweite Gelenkteil (16) federnde Rückstelleinrichtungen (35) umfasst, die dazu neigen, die Arbeitsstellung des länglichen Schneidmechanismus' (12) wiederherzustellen.

2. Beschneidemaschine zum Beschneiden unterer Triebe in Baumplantagen nach Anspruch 1, **dadurch gekennzeichnet, dass** der feststehende Rahmen (2) mit einem Querelement (3) versehen ist, das mit den Verankerungspunkten des Traktors (1) und jeweils vertikalen Profilen (4) verbunden ist, und der bewegliche Rahmen (5) durch eine horizontale Strebe (7) ausgebildet ist, von der sich seitlich und darüber entsprechende röhrenförmige Profile (8) erstrecken, die sich extern auf den vertikalen Profilen (4) durch Einwirkung eines Hydraulikzylinders (6) bewegen und die zudem durch einen oberen Träger (9) verbunden sind, auf den die Stange des Hydraulikzylinders (6) wirkt, um das vertikale Anheben oder Absenken des beweglichen Rahmens (5) zu bewirken.

3. Beschneidemaschine zum Beschneiden unterer Triebe in Baumplantagen nach Anspruch 1, **dadurch gekennzeichnet, dass** das erste Gelenkteil (14) durch einen röhrenförmigen zentralen Abschnitt (21) ausgebildet ist, von dessen Enden sich erste und zweite Endabschnitte (22, 23) erstrecken, die in 90° und unterschiedlichen Richtungen ausgerichtet sind, wobei die erste Fixiereinrichtung (13) an ihrem zentralen Abschnitt (21) angeschlossen ist, die Halterung (20) an ihrem ersten Endabschnitt (22) angeschlossen ist und die zweite Fixiereinrichtung (15) an ihrem zweiten Endabschnitt (23) angeschlossen ist.

4. Beschneidemaschine zum Beschneiden unterer Triebe in Baumplantagen nach Anspruch 1, **dadurch gekennzeichnet, dass** das zweite Gelenkteil (16) eine horizontale Buchse (25) umfasst, in der der zweite Endabschnitt (23) drehbar gelagert ist, wobei die Position des ersten Gelenkteils (14) in Bezug auf das zweite Gelenkteil (16) durch die zweite Fixiereinrichtung (15) fixiert ist.

5. Beschneidemaschine zum Beschneiden unterer Triebe in Baumplantagen nach Anspruch 1, **dadurch gekennzeichnet, dass** die Schelle (18) aus Klemmbacken (28) besteht, die die Strebe (11) in einer bestimmten Höhe umgreifen und an dieser durch eine dritte Fixiereinrichtung (29) fixiert sind, wobei die Klemmbacken (28) durch eine vertikale Buchse (30) verbunden sind.

6. Beschneidemaschine zum Beschneiden unterer Triebe in Baumplantagen nach Anspruch 4 und 5, **dadurch gekennzeichnet, dass** das zweite Gelenkteil (16) zusätzlich einen vertikalen Kolben (27) umfasst, der sich am unteren Teil zu der horizontalen Buchse (25) erstreckt, die an die vertikale Buchse (30) drehbar gekoppelt ist.

7. Beschneidemaschine zum Beschneiden unterer Triebe in Baumplantagen nach Anspruch 4 bis 6, **dadurch gekennzeichnet, dass** das zweite Gelenkteil (16) zusätzlich Räder (31) umfasst, die in gegenüberliegender Anordnung seitlich mit dem vertikalen Kolben (27) verbunden sind und auf der Oberseite der vertikalen Buchse (30) ruhen, in der eine Nocke (32) ausgebildet ist, auf der die Räder (31) rollen, wenn sich das zweite Gelenkteil (16) infolge des Kontaktes der Schutzvorrichtung (17) mit einem Hindernis dreht, und der vertikale Kolben (27) ein zentrales Bohrloch (33) aufweist, in das eine Schraube (34) geschraubt ist, die von federnden Rückstelleinrichtungen (35) umgeben ist, die an dem einen Ende auf dem Kopf der Schraube (34) und an ihrem anderen Ende auf einem horizontalen Lager (36) ruhen, das seinerseits auf einer inneren Scheibe (37) ruht, die in der vertikalen Buchse (30) definiert ist, wobei die Drehbewegung der Räder (31) auf der Nocke (32), wenn die Schutzvorrichtung (17) zurückgezogen ist, die Anhebung des vertikalen Kolbens (27) und die Kompression der federnden Rückstelleinrichtungen (35) bestimmt, die dazu neigen, die Ausgangsstellung der Schutzvorrichtung (17) wiederherzustellen.

## Revendications

1. Dresseuse permettant de tailler des jeunes pousses dans des plantations d'arbres à assembler à l'avant d'un tracteur (1) par l'intermédiaire d'un châssis fixe (2) par rapport auquel un châssis mobile (5) muni d'une barre horizontale (7) se déplace en hauteur avec un mouvement vertical, à partir de ses côtés des bras horizontaux correspondants s'étendent avec un mouvement télescopique (10) supportant à leurs extrémités des colonnes verticales (11) auxquelles des outils de coupe (12) sont associés à une certaine hauteur, les outils de coupe (12) sont constitués de mécanismes de coupe longitudinaux (12), **caractérisée en ce que** la machine comprend, indépendamment associé à chaque colonne verticale (11) :
une première partie d'articulation (14) sur laquelle des oreilles (26) sont assemblées en rotation appartenant au mécanisme de coupe longitudinal (12) avec la participation d'un premier moyen de fixation (13) fixant l'orientation angulaire du mécanisme de coupe longitudinal (12) par rapport à son axe longitudinal définissant un angle d'attaque,
une deuxième partie d'articulation (16), munie d'un mouvement de rotation dans le plan horizontal autour d'une pince (18) englobant la colonne verticale (11), à laquelle la première partie d'articulation (14) est fixée par l'intermédiaire d'un deuxième moyen de fixation (15) qui établit l'inclinaison du mécanisme de coupe longitudinal (12) par rapport à la verticale afin de définir une position de travail ou de transport,
un dispositif de protection (17) couplé à la première partie d'articulation (14) par l'intermédiaire d'un support (20) qui est dans une position qui est devant le mécanisme de coupe longitudinal (12), formant un secteur de contact en cas d'obstacle, protégeant le mécanisme de coupe longitudinal (12) et provoquant sa rétraction due à la rotation de la deuxième partie d'articulation (16) dans le plan horizontal, la deuxième partie d'articulation (16) incorporant un moyen de recouvrance élastique (35) qui tend à assurer la recouvrance de la position de fonctionnement du mécanisme de coupe longitudinal (12).

2. Dresseuse permettant de tailler des jeunes pousses dans des plantations d'arbres selon la revendication 1, **caractérisée en ce que** le châssis fixe (2) est muni d'une traverse (3) qui est couplée aux points d'ancrage du tracteur (1) et de profils verticaux respectifs (4), et le châssis mobile (5) est formé par une barre horizontale (7) à partir de laquelle des profils tubulaires respectifs (8) s'étendent latéralement et au-dessus se déplaçant à l'extérieur sur les profils verticaux (4) par l'action d'un vérin hydraulique (6) et qui sont également reliés par une barrette supérieure (9) sur laquelle la tige du vérin hydraulique (6) agit de manière à provoquer l'élévation ou l'abaissement vertical (e) du châssis mobile (5).

3. Dresseuse permettant de tailler des jeunes pousses dans des plantations d'arbres selon la revendication 1, **caractérisée en ce que** la première partie d'articulation (14) est formée par une section centrale tubulaire (21) à partir de ses extrémités, s'étendent des première et deuxième sections d'extrémité (22, 23) orientées à 90° et avec différentes directions, le premier moyen de fixation (13) étant couplé sur sa section centrale (21), le support (20) étant couplé sur sa première section d'extrémité (22) et le deuxième moyen de fixation (15) étant couplé sur sa deuxième section d'extrémité (23).

4. Dresseuse permettant de tailler des jeunes pousses dans des plantations d'arbres selon la revendication 1, **caractérisée en ce que** la deuxième partie d'articulation (16) comprend une douille horizontale (25) dans laquelle la deuxième section d'extrémité (23) est couplée en rotation, la position de la première partie d'articulation (14) étant fixée à la deuxième partie d'articulation (16) par l'intermédiaire du deuxième moyen de fixation (15).

5. Dresseuse permettant de tailler des jeunes pousses dans des plantations d'arbres selon la revendication 1, **caractérisée en ce que** la pince (18) est constituée de crochets (28) englobant la colonne (11) à une certaine hauteur, étant fixés à celle-ci par un troisième moyen de fixation (29), lesdits crochets (28) étant reliés par une douille verticale (30).

6. Dresseuse permettant de tailler les jeunes pousses dans des plantations d'arbres selon les revendications 4 et 5, **caractérisée en ce que** la deuxième partie d'articulation (16) comprend de plus un piston vertical (27) s'étendant de la partie inférieure à la douille horizontale (25) qui est couplé en rotation sur la douille verticale (30).

7. Dresseuse permettant de tailler des jeunes pousses dans des plantations d'arbres selon les revendications 4 à 6, **caractérisée en ce que** la deuxième partie d'articulation (16) comprend de plus des roues (31) couplées latéralement au piston vertical (27), en agencement opposé, reposant sur la face supérieure de la douille verticale (30) où une came est agencée (32) sur laquelle les roues (31) roulent lorsque la deuxième partie d'articulation (16) tourne en raison du contact du dispositif de protection (17) contre un obstacle, et le piston vertical (27) présente un trou de forage central (33) dans lequel une vis (34) est filetée, qui est entourée par un moyen de recouvrance élastique (35) reposant à une extrémité sur la tête de la vis (34) et à son autre extrémité sur un palier horizontal (36) à son tour reposant contre un disque interne (37) défini dans la douille verticale (30), où le mouvement de rotation des roues (31) sur la came (32) lorsque le dispositif de protection (17) est rétracté, détermine l'élévation du piston vertical (27) et la compression du moyen de recouvrance élastique (35), qui tend à assurer la recouvrance de la position initiale du dispositif de protection (17).
